# EUROPEAN PATENT SPECIFICATION

(11) **EP 3 749 712 B1**
(45) Date of publication and mention of the grant of the patent: **24.11.2021**
(21) Application number: 19703327.7
(22) Date of filing: 06.02.2019
(51) Int. Cl.: C08L 9/00, C08L 9/06, B60C 1/00, C08L 47/00, C08L 53/02, C08K 5/548

(54) **RUBBER COMPOSITION FOR TYRES WITH GOOD WET GRIP AND ROLLING RESISTANCE PROPERTIES**
KAUTSCHUKZUSAMMENSETZUNG FÜR REIFEN MIT GUTEN NASSHAFTUNGS- UND ROLLWIDERSTANDSEIGENSCHAFTEN
COMPOSITION DE CAOUTCHOUC POUR PNEUS PRÉSENTANT DE BONNES PROPRIÉTÉS D'ADHÉRENCE SUR SOL MOUILLÉ ET DE RÉSISTANCE AU ROULEMENT

(30) Priority: 06.02.2018 GB 201801882
(43) Date of publication of application: 16.12.2020
(73) Proprietor: Apollo Tyres Global R&D B.V., 7521 PT Enschede (NL)
(72) Inventor: GANESAN, Swarupini, 6811EZ Arnhem (NL); ZEEMAN, Raymond, 7582EJ Losser (NL); MARINUS, Sander, 7512BJ Enschede (NL); STEVENS, Hendrik, 30419 Hannover (DE)
(74) Representative: Michalski Hüttermann & Partner Patentanwälte mbB
(86) International application number: PCT/EP2019/052924
(87) International publication number: WO 2019/154866

(56) References cited:
- WO-A1-2016/202646
- FR-A1- 2 947 275

## Description

The present invention relates to a cross-linkable rubber composition, a method of preparing a cross-linkable rubber composition, a cross-linked rubber composition obtained by cross-linking such a rubber composition, a method of preparing a tyre and a tyre.

Tread rubber is one of the important portions of a pneumatic tyre which contributes enormously to the overall performance of a tyre. A tyre has to perform well in severe weather conditions and it has to exhibit a variety of performances such as wet grip, abrasion resistance and low rolling resistance.

It is well known in rubber compounding that there is a trade-off between wet grip and rolling resistance. The tread compound can be optimized to exhibit good wet grip by using high T_{g} polymers like SBR but it normally results in high rolling resistance. On the other hand, tuning the rubber compound by using low T_{g} polymers like BR to reduce rolling resistance possibly leads to impairment in wet grip. Several types of resins are therefore introduced to increase the wet grip properties but these often have a negative effect on the rolling resistance. In order to obtain high performance tyres, all properties need to be improved simultaneously.

WO 2012/152686 A1 describes a tyre that includes a tread, a crown with a crown reinforcement, first and second sidewalls, two beads, and a carcass reinforcement anchored to the two beads and extending from the first sidewall to the second sidewall. The tread includes a thermoplastic elastomer that is a block copolymer, which includes at least one elastomer block and at least one thermoplastic block. A total content of the thermoplastic elastomer in the tread is within a range varying from 65 to 100 phr (parts by weight per hundred parts of elastomer).

WO 2011/061145 describes a tyre, the tread of which comprises a rubber composition comprising at least one diene elastomer, such as SBR and/or BR, a reinforcing filler, such as silica and/or carbon black, and more than 10 phr, preferably more than 15 phr, of a hydrogenated styrene thermoplastic elastomer. This composition, which exhibits a reduced viscosity in the raw state, makes it possible to obtain treads of tires exhibiting a reduced rolling resistance, while retaining a good level of wet grip.

DE 10 2016 207396 A1 concerns a sulphur cross-linkable rubber mixture, particularly for a vehicle tyre. The sulphur-rubber mixture contains at least a diene rubber, silica, a blocked and/or unblocked mercaptosilanes as a silane coupling agent and a thermoplastic elastomer of the TPE-S type (styrene triblock copolymers).

The publication by Sengloyluan, K., Sahakaro, K., Dierkes, W. K., & Noordermeer, J. W. M. (2016) "Reinforcement Efficiency of Silica in Dependence of Different Types of Silane Coupling Agents in Natural Rubber-based Tire Compounds", KGK Kautschuk, Gummi, Kunststoffe, 69(5), 44-53 studies the effects of 3-Octanoylthio-1-propyltriethoxysilane (NXT), 3-mercaptopropyldi( tridecan-1-oxy-13-penta(ethyleneoxide))ethoxysilane (VP Si-363) and vinyltriethoxysilane (VTES) on the properties of silica filled NR compounds in comparison with bis-(triethoxysilylpropyl) tetrasulfide (TESPT). In this publication, an increase of the silane content to the same molar level of ethoxy functional groups as that of TESPT, results in improvement of both the compound and vulcanizate properties. With equivalent amounts of ethoxy-groups, the use of NXT and TESPT results in the same level of tensile strength. As far as can be derived from a lower tan δ at 5 °C and higher tan δ at 60 °C, the compounds with TESPT as coupling agent indicate slightly better wet grip and rolling resistance if applied in tire tread compounds, when compared to the compounds with NXT, VP Si-363 and VTES. Optimizing the tread compound for wet grip normally results in trade-off in rolling resistance.

For instance, WO 2014/068486 A1 discloses the use of trialkoxymercaptoalkyl-silanes in rubber compositions.

The present invention has the object to provide a composition for a tyre tread which has improved wet grip and good rolling resistance, without compromising on other performances.

This object is achieved by a cross-linkable rubber composition according to claim 1, a method of preparing a cross-linkable rubber composition according to claim 11, a cross-linked rubber composition according to claim 12, a method for preparing a tyre according to claim 14 and a tyre according to claim 15. Advantageous embodiments are the subject of the dependent claims. They may be combined freely unless the context clearly indicates otherwise.

Accordingly, a cross-linkable rubber composition is provided, the cross-linkable rubber composition comprising, per hundred parts by weight of rubber (phr) ≥ 1 phr to ≤ 100 phr of a rubber component selected from the group of styrene-butadiene rubber (SBR), polybutadiene rubber (BR), natural rubber (NR) or a mixture thereof; wherein the composition further comprises ≥ 1 phr to ≤ 50 phr of a thermoplastic elastomer (TPE) with a glass transition temperature of ≥ -30 °C (measured by DSC, according to ISO 22768), the composition further comprises an at least partially aliphatic resin component and the composition further comprises a blocked mercaptosilane and/or an unblocked mercaptosilane.

It has surprisingly been found that such a rubber composition, having a thermoplastic elastomer (TPE) with a comparatively high glass transition temperature T_{g} as an additive worked very well in broadening the tan delta curve of the cross-linked compound, indicating that the compound can perform well in a wide range of conditions and used as a rubber for a tyre tread (determined from DMA measurement according to ISO 4664-1), without deterioration of other compound properties.

Thermoplastic elastomers (also abbreviated as "TPEs") have a structure intermediate between thermoplastic polymers and elastomers. These are block copolymers composed of rigid thermoplastic blocks connected via flexible elastomer blocks. The thermoplastic elastomer used for the implementation of the invention is a block copolymer, the chemical nature of the thermoplastic blocks and elastomer blocks of which can vary.

The number-average molecular weight (denoted Mn) of the TPE is preferably between 30 000 and 500 000 g/mol, more preferably between 40 000 and 400 000 g/mol, most preferably in a range of 50 000 to 300 000 g/mol The number-average molecular weight (Mn) of the TPE elastomer can be determined, in a known manner, by steric exclusion chromatography (SEC).

TPEs generally exhibit two glass transition temperature peaks, the lowest temperature being relative to the elastomer part of the TPE and the highest temperature being relative to the thermoplastic part of the TPE. Thus, the flexible blocks of the TPEs are defined by a T_{g} which is less than ambient temperature (25° C), while the rigid blocks have a T_{g} which is greater than 80° C.

The glass transition temperatures discussed in connection with the TPEs refer to the lowest of the present T_{g} values, hence describing the T_{g} of the flexible, elastomer domains of the polymer. According to the invention the TPE has a glass transition temperature of ≥ -30 °C (measured by DSC, according to ISO 22768). This norm specifies a heating rate of 20 °C/min. Preferably the glass transition temperature T_{g} is ≥ -20 °C. Without wishing to be bound by theory it is believed that only TPEs with a high T_{g} for their elastomer domains exhibit sufficient immiscibility to the rubber polymer blend, thereby increasing wet grip without increasing the rolling resistance.

The TPEs can be provided in linear or in a branched or dendrimer form. In addition, the elastomeric part of the TPE block copolymer can contain either saturated or unsaturated blocks. For example, the TPE can be a copolymer wherein the elastomer part is saturated and the TPE comprises styrene blocks and alkylene blocks. The alkylene blocks are preferably ethylene, propylene or butylene. More preferably, this TPE elastomer is selected from the following group consisting of diblock or triblock copolymers which are linear or star-branched: styrene/ethylene/butylene (SEB), styrene/ethylene/propylene (SEP), styrene/ethylene/ethylene/propylene (SEEP), styrene/ethylene/butylene/styrene (SEBS), styrene/ethylene/propylene/styrene (SEPS), styrene/ethylene/ethylene/propylene/styrene (SEEPS), styrene/isobutylene (SIB), styrene/isobutylene/styrene (SIBS) and the mixtures of these copolymers.

Alternatively, the TPE is a copolymer wherein the elastomer part is unsaturated and the TPE comprises styrene blocks and diene blocks, these diene blocks being in particular isoprene or butadiene blocks. More preferably, this TPE elastomer is selected from the following group consisting of diblock or triblock copolymers which are linear or star-branched: styrene/butadiene (SB), styrene/isoprene (SI), styrene/butadiene/isoprene (SBI), styrene/butadiene/styrene (SBS), styrene/isoprene/styrene (SIS), styrene/butadiene/isoprene/styrene (SBIS) and the mixtures of these copolymers.

Commercial available TPEs according to the invention are SEPS, SEEPS or SEBS type sold by Kraton under the Kraton G name (e.g., G1650, G1651, G1654 and G1730 products) or Kuraray under the Septon name (e.g., Septon 2007, Septon 4033 or Septon 8004), or the elastomers of SIS type sold by Kuraray under the name Hybrar 5125 or sold by Kraton under the name D1161, or also the elastomers of linear SBS type sold by Polimeri Europa under the name Europrene SOLT 166 or of star-branched SBS type sold by Kraton under the name D1184. Mention may also be made of the elastomers sold by Dexco Polymers under the Vector name (e.g., Vector 4114 or Vector 8508). Mention may be made, among multiblock TPEs, of the Vistamaxx TPE sold by Exxon; the COPE TPE sold by DSM under the Arnitel name or by DuPont under the Hytrel name or by Ticona under the Riteflex name; the PEBA TPE sold by Arkema under the PEBAX name; or the TPU TPE sold by Sartomer under the name TPU 7840 or by BASF under the Elastogran name. Further mention may be made of SEBS types from Asahi Kasei such as S.O.E S1606 and S.O.E S1611.

According to the invention, the composition comprises ≥ 1 phr to ≤ 100 phr of a rubber component, selected from the group of styrene-butadiene rubber (SBR), polybutadiene rubber (BR), natural rubber (NR) or a mixture thereof. The SBR rubber component may contain one type of SBR rubber or several different types. Preferably, at least one type of SBR rubber is manufactured according to the solution process (SSBR or solution SBR). Likewise, the BR rubber component may contain one type of BR rubber or several different types.

The composition further comprises an at least partially aliphatic resin component. The resin component may, for example, be present in an amount of ≥ 5 phr to ≤ 60 phr. Suitable resins are resins without aromatic structure such as polyterpene resins or aliphatic hydrocarbon resins such as C5 or DCPD (dicyclopentadiene) resins. Further suitable resins are partially aliphatic resins such as terpene phenolic resins.

It is further understood that in formulations discussed in connection with the present invention the phr amount of all rubber components adds up to 100.

The cross-linkable rubber composition according to the invention comprises cross-linkable groups in the individual rubber components. They may be cross-linked (cured, vulcanised) by methods known to a skilled person in the rubber technology field.

The cross-linkable rubber compositions may be sulphur-vulcanizable and/or peroxide-vulcanizable. Other vulcanization systems may also be used. If desired, additional additives besides TPE can be added. Examples of usual additives are resins, stabilizers, antioxidants, lubricants, fillers, dyes, pigments, flame retardants, conductive fibres and reinforcing fibres.

The composition further comprises a blocked mercaptosilane and/or an unblocked mercaptosilane. This silane component may, for example, be present in an amount of ≥ 1 phr to ≤ 30 phr. According to the invention a "blocked mercaptosilane" is to be understood as a silane with an S-PG group in the molecule, wherein PG a protecting group for thiol groups is. An example of a protecting group is an acyl group. Conversely, an "unblocked mercaptosilane" is a silane with a free thiol group (S-H group).

A preferred mercaptosilane has the general formula R₃Si-Z-S-R' with individual substituents R being equal or different from each other and denoting a group comprising alkoxy groups with 1 to 10 carbon atoms and R' denoting an acyl group with 1 to 20 carbon atoms or denoting a hydrogen atom. Z denotes an alkyl group with 1 to 10 carbon atoms. Particularly suitable are silanes which are sold by Momentive under the name NXT® in different variants.

It is also possible for the rubber composition to be provided with a conductive filler to make it at least partially conductive.

In an embodiment of the rubber composition the composition comprises a blocked mercaptosilane according to the formula R₃Si-Z-S-R' with individual substituents R being equal or different from each other and denoting a group comprising alkoxy groups with 1 to 10 carbon atoms, R' denoting an acyl group with 1 to 20 carbon atoms and Z denoting an alkyl group with 1 to 10 carbon atoms. Preferably this silane is 3-octanoylthio-1-propyltriethoxysilane.

In another embodiment of the rubber composition the composition comprises an unblocked mercaptosilane which comprises an alkyl thiol functional group and an alkyl-endcapped polyalkylene oxide functional group. Preferably the silane has the structure: 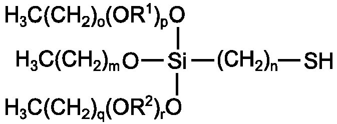 and R¹ and R² independently denote a C₂ to C₂ alkylene radical, n is ≥ 1 to ≤ 10, m is ≥ 1 to ≤ 10, o is ≥ 5 to ≤ 25, p is ≥ 5 to ≤ 25, q is ≥ 5 to ≤ 25 and r is ≥ 5 to ≤ 25.

More preferred is such a silane where R¹ and R² are ethylene or propylene radicals. Furthermore, it is preferred that n is ≥ 2 to ≤ 4, m is ≥ 1 to ≤ 2, o is ≥ 11 to ≤ 13, p is ≥ 4 to ≤ 6, q is ≥ 11 to ≤ 13 and r is ≥ 4 to ≤ 6. A particularly preferred silane, sold by Evonik under the name VP Si363, has the following structure:

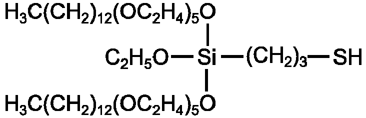

Without wishing to be bound by theory it is believed that a mercaptosilane provides efficient hydrophobation of silica surface resulting in low filler-filler interaction compared to TESPT silane. This leads to low rolling resistance (tan delta at 70 °C) in the cured compositions. Even though the rolling resistance indicator can be significantly reduced, the wet grip indicator can remain at the same level and a broadness of the tan delta curve can be retained indicating that the winter performance is not affected In another embodiment of the rubber composition the TPE has a glass transition temperature of ≥ -30 °C to ≤ 10 °C (measured by DSC, according to ISO 22768). Preferably the glass transition temperature T_{g} is ≥ -20 °C to ≤ -10 °C.

In an another embodiment of the rubber composition the amount of TPE present in the composition is not considered as rubber for the purpose of determining the amounts of the composition's individual components based on their phr value. In such formulations the amount of TPE is considered an additive and the phr amount the rubber components, excluding the TPE, adds up to 100.

In an embodiment of the rubber composition at least one elastomer block of the TPE is selected from isoprene, butadiene, ethylene, butylene or a mixture thereof.

In another embodiment of the rubber composition the TPE is a styrene-isoprene-styrene (SIS), styrene- butadiene-styrene (SBS) or styrene-ethylene-butylene-styrene (SEBS) elastomer.

In another embodiment of the rubber composition the TPE has a styrene content of ≥ 15 to ≤ 70 weight-%. Preferably the TPE has a styrene content of ≥ 18 to ≤ 60 weight-%.

In another embodiment of the rubber composition the TPE has a Shore A hardness according to ISO 7619 of ≥ 50 to ≤ 90. Preferably the Shore A hardness is ≥ 60 to ≤ 75.

In another embodiment of the rubber composition the composition comprises ≥ 20 (preferably ≥ 20 to ≤ 100) phr of rubbers with a glass transition temperature of ≥ -120 °C to ≤ -50 °C (measured by DSC, according to ISO 22768). In particular, the composition may comprise a first styrene-butadiene rubber as a low T_{g} rubber and a second styrene-butadiene rubber as a high T_{g} rubber (Tg measured by DSC, according to ISO 22768).

In another embodiment of the rubber composition the resin component comprises a polyterpene resin, C5 resin, DCPD or terpene-phenolic resin. A preferred polyterpene resin has a Mw of ≥ 800 g/mol to ≤ 1200 g/mol. A preferred C5 resin has a Mw of ≥ 2000 to ≤ 4000 g/mol. The polyterpene resin is a resin obtained by polymerizing a terpene compound, or a hydrogenated product of the resin. The terpene compound is a hydrocarbon represented by (C₅H₈), or an oxygenous derivative thereof, whose basic structure is any of terpenes classified into monoterpenes (C₁₀H₁₆), sesquiterpenes (C₁₅H₂₄), diterpenes (C₂₀H₃₂), and the like. Examples of the compound include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include terpene resins formed from the terpene compounds described above, such as α-pinene resin, β-pinene resin, limonene resin, dipentene resin, or β-pinene/limonene resin, as well as hydrogenated terpene resins prepared by hydrogenating any of the terpene resins. Preferably non-hydrogenated terpene resins are used; most preferably resins comprising limonene as a co-monomer are used. Without wishing to be bound by theory it is believed that a higher affinity of a polyterpene resin to the mid-block of an SIS-type TPE, i.e., isoprene, could be the reason for a pronounced increase in tan delta at 0 °C (wet grip indicator). The high affinity of resin could be related to the similar chemical structure of polyterpene resin and isoprene.

In another embodiment of the rubber composition comprises a first rubber with a T_{g} of ≥ - 120 °C to ≤ - 50 °C and a second rubber with a T_{g} of ≥ - 50 °C to ≤ - 10 °C. For example, the rubber component may comprise a first styrene-butadiene rubber and a second styrene-butadiene rubber with the above-mentioned glass temperature ranges.

In another embodiment of the rubber composition the composition comprises:

| | phr |
|---|---|
| Rubber components | |
| BR with a T_{g} of ≥ - 110 °C to ≤ - 80 °C | ≥ 35 to ≤ 55 |
| SSBR with a styrene content of ≥ 15 to ≤ 25 weight-%, a vinyl content of ≥ 40 to ≤ 60 weight-% and a T_{g} of ≥ - 30 °C to ≤ - 15 °C | ≥ 10 to ≤ 30 |
| SSBR with a styrene content of ≥ 5 to ≤ 50 weight-%, a vinyl content of ≥ 20 to ≤ 60 weight-% and a T_{g} of ≥ ― 70°C to ≤ ― 20 °C | ≥ 30 to ≤ 50 |

| Additives | |
|---|---|
| Polyterpene resin, C5 resin or terpene-phenolic resin | ≥ 20 to ≤ 40 |
| Styrene-isoprene-styrene (SIS) block copolymer with a T_{g} of ≥ - 20 °C to ≤ - 10 °C and a styrene content of ≥ 15 to ≤ 25 weight-% | ≥ 5 to ≤ 30 |
| Silane of the structure 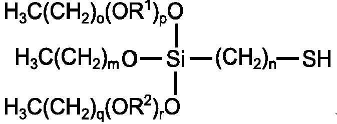 where R¹ and R² are ethylene or propylene radicals, n is ≥ 2 to ≤ 4, m is ≥ 1 to ≤ 2, o is ≥ 11 to ≤ 13, p is ≥ 4 to ≤ 6, q is ≥ 11 to ≤ 13 and r is ≥ 4 to ≤ 6 and/or 3-octanoylthio-1-propyltriethoxysilane | ≥ 5 to ≤ 20 |

In another embodiment of the rubber composition the composition comprises:

| | phr |
|---|---|
| Rubber components | |
| BR with a T_{g} of ≥ - 110 °C to ≤ - 80 °C | ≥ 30 to ≤ 60 |
| SSBR with a styrene content of ≥ 15 to ≤ 30 weight-%, a vinyl content of ≥ 40 to ≤ 60 weight-% and a T_{g} of ≥ - 30 °C to ≤ - 15 °C | ≥ 5 to ≤ 35 |
| SSBR with a styrene content of ≥ 5 to ≤ 20 weight-%, a vinyl content of ≥ 15 to ≤ 40 weight-% and a T_{g} of ≥ - 70 °C to ≤ - 50 °C | ≥ 20 to ≤ 60 |

| Additives | |
|---|---|
| Polyterpene resin, C5 resin or terpene-phenolic resin | ≥ 20 to ≤ 40 |
| Styrene-isoprene-styrene (SIS) block copolymer with a T_{g} of ≥ - 20 °C to ≤ - 10 °C and a styrene content of ≥ 15 to ≤ 25 weight-% | ≥ 5 to ≤ 30 |
| Silane of the structure 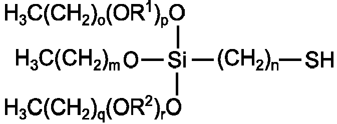 where R¹ and R² are ethylene or propylene radicals, n is ≥ 2 to ≤ 4, m is ≥ 1 to ≤ 2, o is ≥ 11 to ≤ 13, p is ≥ 4 to ≤ 6, q is ≥ 11 to ≤ 13 and r is ≥ 4 to ≤ 6 and/or 3-octanoylthio-1-propyltriethoxysilane | ≥ 5 to ≤ 20 |

The invention also relates to a method of preparing a cross-linkable rubber composition according to the invention, comprising the steps of:
A) providing a rubber component selected from the group of SBR, BR, NR or a mixture thereof;
B) adding ≥ 1 phr to ≤ 50 phr of a thermoplastic elastomer (TPE) with a glass transition temperature of ≥ -30 °C (measured by DSC, according to ISO 22768), a resin component and a silane component which comprises a blocked mercaptosilane and/or an unblocked mercaptosilane.
C) adding curing agents.

Another aspect of the invention is a cross-linked rubber composition obtained by cross-linking a rubber composition according to the invention.

In an embodiment, the cross-linked rubber composition has a tan delta at 0 °C of ≥ 0.27 to ≤ 0.30 (determined from DMA measurements according to ISO 4664-1, frequency 10 Hz, 0.1% dynamic strain) and a tan delta at 70 °C of ≥ 0.10 to ≤ 0.16 (determined from DMA measurements according to ISO 4664-1, frequency 10 Hz, 6 % dynamic strain). Preferably the tan delta at 0 °C is ≥ 0.28 to ≤ 0.29 and the tan delta at 70 °C is ≥ 0.11 to ≤ 0.15.

In another embodiment of the cross-linked rubber composition its tan delta curve (determined from dynamic mechanical analysis (DMA) measurements according to ISO 4664-1, frequency 10 Hz, 0.1% dynamic strain) has a full width at half maximum (FWHM) range of ≥ 80 °C to ≤ 90 °C.

In another embodiment the cross-linked rubber composition has a rebound at 23 °C, determined according to ISO 4662, of ≥ 24% to ≤ 31% (preferably ≥ 25 to ≤ 30%).

In another embodiment the cross-linked rubber composition has a rebound at 70 °C, determined according to ISO 4662, of ≥ 50 % to ≤ 60% (preferably ≥ 52 to ≤ 59%).

The present invention also relates to a method of preparing a tyre, comprising the steps of:
- providing a tyre assembly comprising a rubber composition according to the invention;
- cross-linking at least the rubber composition according to the invention in the tyre assembly.

The present invention also encompasses a tyre comprising a tyre tread, wherein the tyre tread comprises a cross-linked rubber composition according to the invention.

### Examples

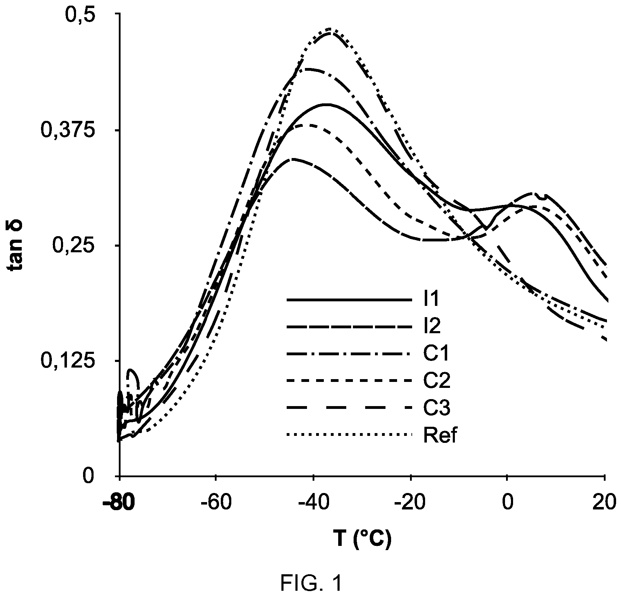

The invention will be further described with reference to the following examples and figure without wishing to be limited by them. FIG. 1 shows temperature-dependent DMA curves for the cured compositions Ref, II, 12, C1, C2 and C3.

In accordance with the preceding, cross-linkable rubber compositions were prepared as described in the tables below. In a first step, all rubber components were added and mixed, followed by a second step wherein all additives were added and mixed and a last step wherein the curing package was added. Compositions Ref, C1 and C2 are comparative examples and compositions I1 and I2 are compositions according to the invention. Unless stated otherwise, glass temperatures given were determined by DSC according to ISO 22768.

SSBR I had a styrene content of 21%, a vinyl content of 50% and a T_{g} of -25 °C.

SSBR II had a styrene content of 15%, a vinyl content of 30% and a T_{g} of -62 °C.

BR I was a high cis (Nd catalyst) butadiene rubber with a cis content of 98% and a T_{g} of -105 °C.

SIS was a styrene-isoprene-styrene block copolymer with a T_{g} of -13 °C and a styrene content of 20 weight-%.

The polyterpene resin had a molecular weight of 1090 g/mol, a softening point of 125 ° C and a glass transition temperature of 73 °C.

The AMS (alpha methyl styrene) resin had a molecular weight of 1300 g/mol.

Silane Si363 has the following structure:

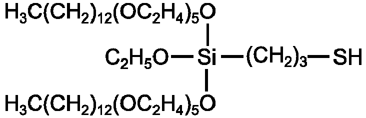

The silane NXT was 3-octanoylthio-1-propyltriethoxysilane.

TESPT denotes tetrasulphide silane.

The table below shows the compositions of I1, 12, Ref, C1, C2 and C3. Amounts for the components are given in PHR. It should be noted that in the examples the SIS is considered part of the additive package and therefore does not contribute to total amount of rubber with respect to the phr values for the calculation of the individual amounts of the composition's components.

| | **Ref** | **C1** | **C2** | **I1** | **C3** | **I2** |
|---|---|---|---|---|---|---|
| Rubber components | | | | | | |
| BR I | 40 | 45 | 45 | 45 | 45 | 45 |
| SSBR I | 20 | 15 | 15 | 15 | 15 | 15 |
| SSBR II | 40 | 40 | 40 | 40 | 40 | 40 |
| Additives | | | | | | |
| Carbon black | 7 | 7 | 7 | 7 | 7 | 7 |
| Silica | 110 | 95 | 95 | 95 | 95 | 95 |
| TESPT | 8.8 | 7.6 | 7.6 | | | |
| Silane Si363 | | | | 9.5 | 9.5 | |
| Silane NXT | | | | | | 9.5 |
| Polyterpene resin | 20 | 30 | 30 | 30 | | 30 |
| AMS resin | | | | | 30 | |
| SIS | | | 15 | 15 | 15 | 15 |
| Processing oil, ZnO, stearic acid, antidegradant and processing promoter | 61 | 36 | 36 | 31 | 31 | 31 |
| Curing package | | | | | | |
| Sulphur and accelerators | 6.2 | 5.5 | 5.5 | 4.25 | 4.25 | 5.43 |

The reference example "Ref" has TESPT as the silane component and a polyterpene resin as the resin component. Furthermore, Ref does not contain any thermoplastic elastomer block copolymers. The same applies to the comparative example C1. The comparative example C2 contains SIS as an additive, TESPT as the silane component and the polyterpene resin. The inventive example I1 features the silane 363, the polyterpene resin and SIS as an additive. The inventive example I2 features the silane NXT, the polyterpene resin and SIS as an additive. The comparative example C3 contains the silane 363 as the silane component and SIS as an additive but the aromatic AMS resin instead of the polyterpene resin.

The following table shows the results obtained from the cured compositions.

| | **Ref** | **C1** | **C2** | **C3** | **I1** | **I2** |
|---|---|---|---|---|---|---|
| Rebound 23 °C (%) | 32 | 32 | 27 | 35 | 30 | 25 |
| Rebound 70 °C (%) | 55 | 55 | 55 | 61 | 59 | 52 |
| Tan δ 0 °C (Wet grip indicator) | 0.22 | 0.22 | 0.28 | 0.24 | 0.29 | 0.29 |
| Tan δ 70 °C (RR indicator) | 0.15 | 0.15 | 0.15 | 0.11 | 0.11 | 0.15 |
| Full width half maximum (FWHM) (°C) | -54 to -5 | -61 to 0 | -61 to 24 | -56 to -1 | -60 to 19 | -64 to 25 |
| FWHM range (°C) | 49 | 61 | 85 | 55 | 79 | 89 |

Rebound at 23 °C (ISO 4662) is believed to be an indicator for wet grip. Lower rebound value at 23 °C relates to an improvement in wet grip. Rebound testing at 70 °C (ISO 4662) is believed to be an indicator for rolling resistance (RR). A higher rebound value at 70 °C relates to a lower rolling resistance for a tyre whose tread comprises such a cured rubber. In a similar fashion, a higher tan δ at 0 °C is related to better wet grip, whereas a lower tan δ at 70 °C is an indicator for improved rolling resistance. The tan δ values were measured with a DMA test (ISO 4664-1) using the following settings:
- DMA tests -80 to 25 °C (dynamic strain 0.1% and frequency 10 Hz)
- DMA tests 25 to 80 °C (dynamic strain 6% and frequency 10 Hz)

The comparative example C2 contains polyterpene resin and SIS. As a result of this, FWHM range for C2 increases indicating the ability of the compound to perform well in wide temperature range. Because of the higher affinity of polyterpene resin to isoprene which is the midblock of SIS, tan δ at 0°C is significantly increased indicating an increase in wet grip.

Furthermore, to obtain low rolling resistance, mercaptosilane Si363 is added in place of TESPT. The inventive example I1 containing mercaptosilane Si363 reveals lower tan δ at 70°C as expected. Even though the rolling resistance indicator is decreased, surprisingly the wet grip indicator (tan δ at 0°C) remains at the same level as C2. Furthermore, the broadness of the tan δ curve is retained as evident from the higher FWHM range for I1 compared to C1. On the other hand, when polyterpene resin is replaced with AMS resin, C3 containing mercaptosilane Si363 also resulted in low rolling resistance indicator but it does not display broad tan δ curve.

Therefore, the combination of mercaptosilane, SIS and at least partially aliphatic resin resulted in obtaining low rolling resistance, good wet grip and good winter performance.

## Claims

1. A cross-linkable rubber composition, the cross-linkable rubber composition comprising, per hundred parts by weight of rubber (phr):
≥ 1 phr to ≤ 100 phr of a rubber component selected from the group of styrene-butadiene rubber (SBR), polybutadiene rubber (BR), natural rubber (NR) or a mixture thereof;
**characterised in that**
the composition further comprises ≥ 1 phr to ≤ 50 phr of a thermoplastic elastomer (TPE) with a glass transition temperature of ≥ -30 °C (measured by DSC, according to ISO 22768),
the composition further comprises an at least partially aliphatic resin component and
the composition further comprises a blocked mercaptosilane and/or an unblocked mercaptosilane.

2. The rubber composition according to claim 1, wherein the composition comprises a blocked mercaptosilane according to the formula R₃Si-Z-S-R' with individual substituents R being equal or different from each other and denoting a group comprising alkoxy groups with 1 to 10 carbon atoms, R' denoting an acyl group with 1 to 20 carbon atoms and Z denoting an alkyl group with 1 to 10 carbon atoms.

3. The rubber composition according to claim 1 or 2, wherein the composition comprises an unblocked mercaptosilane which comprises an alkyl thiol functional group and an alkyl-endcapped polyalkylene oxide functional group.

4. The rubber composition according to one of claims 1 to 3, wherein the TPE has a glass transition temperature of ≥ -30 °C to ≤ 10 °C (measured by DSC, according to ISO 22768).

5. The rubber composition according to one of claims 1 to 4, wherein the amount of TPE present in the composition is not considered as rubber for the purpose of determining the amounts of the composition's individual components based on their phr value.

6. The rubber composition according to one of claims 1 to 5, wherein the TPE is a styrene-isoprene-styrene (SIS), styrene- butadiene-styrene (SBS) or styrene-ethylene-butylene-styrene (SEBS) elastomer.

7. The rubber composition according to one of claims 1 to 6, wherein the resin component comprises a polyterpene resin, C5 resin, DCPD or terpene phenolic resin.

8. The rubber composition according to one of claims 1 to 7, wherein the rubber composition comprises a first rubber with a T_{g} of ≥ - 120 °C to ≤ - 50 °C and a second rubber with a T_{g} of ≥ - 50 °C to ≤ - 10 °C.

9. The rubber composition according to one of claims 1 to 8, wherein the composition comprises:
| | phr |
|---|---|
| Rubber components | |
| BR with a T_{g} of ≥ - 110 °C to ≤ - 80 °C | ≥ 35 to ≤ 55 |
| SSBR with a styrene content of ≥ 15 to ≤ 25 weight-%, a vinyl content of ≥ 40 to ≤ 60 weight-% and a T_{g} of ≥ - 30 °C to ≤ - 15 °C | ≥ 10 to ≤ 30 |
| SSBR with a styrene content of ≥ 5 to ≤ 50 weight-%, a vinyl content of ≥ 20 to ≤ 60 weight-% and a T_{g} of ≥ - 70 °C to ≤ - 20 °C | ≥ 30 to ≤ 50 |
| Additives | |
|---|---|
| Polyterpene resin, C5 resin or terpene-phenolic resin | ≥ 20 to ≤ 40 |
| Styrene-isoprene-styrene (SIS) block copolymer with a T_{g} of ≥ - 20 °C to ≤ - 10 °C and a styrene content of ≥ 15 to ≤ 25 weight-% | ≥ 5 to ≤ 30 |
| Silane of the structure 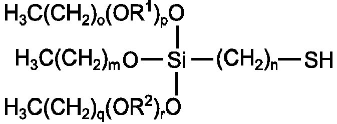 where R¹ and R² are ethylene or propylene radicals, n is ≥ 2 to ≤ 4, m is ≥ 1 to ≤ 2, o is ≥ 11 to ≤ 13, p is ≥ 4 to ≤ 6, q is ≥ 11 to ≤ 13 and r is ≥ 4 to ≤ 6 and/or 3-octanoylthio-1-propyltriethoxysilane | ≥ 5 to ≤ 20 |

10. The rubber composition according to one of claims 1 to 8, wherein the composition comprises:
| | phr |
|---|---|
| Rubber components | |
| BR with a T_{g} of ≥ - 110 °C to ≤ - 80 °C | ≥ 30 to ≤ 60 |
| SSBR with a styrene content of ≥ 15 to ≤ 30 weight-%, a vinyl content of ≥ 40 to ≤ 60 weight-% and a T_{g} of ≥ - 30 °C to ≤ - 15 °C | ≥ 5 to ≤ 35 |
| SSBR with a styrene content of ≥ 5 to ≤ 20 weight-%, a vinyl content of ≥ 15 to ≤ 40 weight-% and a T_{g} of ≥ - 70 °C to ≤ - 50 °C | ≥ 20 to ≤ 60 |
| Additives | |
|---|---|
| Polyterpene resin, C5 resin or terpene-phenolic resin | ≥ 20 to ≤ 40 |
| Styrene-isoprene-styrene (SIS) block copolymer with a T_{g} of ≥ - 20 °C to ≤ - 10 °C and a styrene content of ≥ 15 to ≤ 25 weight-% | ≥ 5 to ≤ 30 |
| Silane of the structure 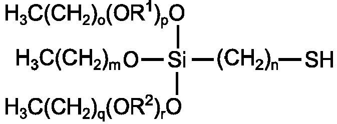 where R¹ and R² are ethylene or propylene radicals, n is ≥ 2 to ≤ 4, m is ≥ 1 to ≤ 2, o is ≥ 11 to ≤ 13, p is ≥ 4 to ≤ 6, q is ≥ 11 to ≤ 13 and r is ≥ 4 to ≤ 6 and/or 3-octanoylthio-1-propyltriethoxysilane | ≥ 5 to ≤ 20 |

11. A method of preparing a cross-linkable rubber composition according to one of claims 1 to 10, comprising the steps of:
A) providing a rubber component selected from the group of SBR, BR, NR or a mixture thereof;
B) adding ≥ 1 phr to ≤ 50 phr of a thermoplastic elastomer (TPE) with a glass transition temperature of ≥ -30 °C (measured by DSC, according to ISO 22768), a resin component and a silane component which comprises a blocked mercaptosilane and/or an unblocked mercaptosilane;
C) adding curing agents.

12. A cross-linked rubber composition, **characterised in that** it is obtained by cross-linking a rubber composition according to one of claims 1 to 10.

13. The cross-linked rubber composition according to claim 11 with a tan delta at 0 °C of ≥ 0.27 to ≤ 0.30 (determined from DMA measurements according to ISO 4664-1, frequency 10 Hz, 0.1% dynamic strain) and a tan delta at 70 °C of ≥ 0.10 to ≤ 0.16 (determined from DMA measurements according to ISO 4664-1, frequency 10 Hz, 6 % dynamic strain).

14. A method of preparing a tyre, comprising the steps of:
- providing a tyre assembly comprising a rubber composition according to one of claims 1 to 10;
- cross-linking at least the rubber composition according to one of claims 1 to 10 in the tyre assembly.

15. A tyre comprising a tyre tread, **characterised in that** the tyre tread comprises a cross-linked rubber composition according to claim 12 or 13.

## Patentansprüche

1. Vernetzbare Kautschukzusammensetzung, wobei die vernetzbare Kautschukzusammensetzung pro hundert Gewichtsteile Kautschuk (phr) Folgendes umfasst:
≥ 1 phr bis ≤ 100 phr einer Kautschukkomponente aus der Gruppe bestehend aus Styrol-Butadien-Kautschuk (SBR), Polybutadien-Kautschuk (BR), Naturkautschuk (NR) oder einer Mischung davon;
**dadurch gekennzeichnet, dass**
die Zusammensetzung ferner ≥ 1 phr bis ≤ 50 phr eines thermoplastischen Elastomers (TPE) mit einer Glasübergangstemperatur ≥ -30 °C (gemessen durch DSC nach ISO 22768) umfasst,
die Zusammensetzung ferner mindestens eine zumindest teilweise aliphatische Harzkomponente umfasst und
die Zusammensetzung ferner ein blockiertes Mercaptosilan und/oder ein unblockiertes Mercaptosilan umfasst.

2. Kautschukzusammensetzung nach Anspruch 1, wobei die Zusammensetzung ein blockiertes Mercaptosilan gemäß der Formel R₃Si-Z-S-R' umfasst, wobei die einzelnen Substituenten R gleich oder voneinander verschieden sind und für eine Gruppe, die Alkoxygruppen mit 1 bis 10 Kohlenstoffatomen umfasst, stehen, R' für eine Acylgruppe mit 1 bis 20 Kohlenstoffatomen steht und Z für eine Alkylgruppe mit 1 bis 10 Kohlenstoffatomen steht.

3. Kautschukzusammensetzung nach Anspruch 1 oder 2, wobei die Zusammensetzung ein unblockiertes Mercaptosilan umfasst, das eine funktionelle Gruppe vom Alkylthiol-Typ und eine funktionelle Gruppe vom Typ alkylverkapptes Polyalkylenoxid umfasst.

4. Kautschukzusammensetzung nach einem der Ansprüche 1 bis 3, wobei das TPE eine Glasübergangstemperatur ≥ -30 °C bis ≤ 10 °C (gemessen durch DSC nach ISO 22768) aufweist.

5. Kautschukzusammensetzung nach einem der Ansprüche 1 bis 4, wobei die in der Zusammensetzung vorliegenden TPE-Menge für den Zweck der Bestimmung der Mengen der einzelnen Komponenten der Zusammensetzung auf der Basis ihres phr-Werts nicht als Kautschuk gilt.

6. Kautschukzusammensetzung nach einem der Ansprüche 1 bis 5, wobei es sich bei dem TPE um ein Styrol-Isopren-Styrol(SIS)-, Styrol-Butadien-Styrol(SBS)- oder Styrol-Ethylen-Butylen-Styrol(SEBS)-Elastomer handelt.

7. Kautschukzusammensetzung nach einem der Ansprüche 1 bis 6, wobei die Harzkomponente ein Polyterpenharz, C5-Harz, DCPD oder Terpen-Phenol-Harz umfasst.

8. Kautschukzusammensetzung nach einem der Ansprüche 1 bis 7, wobei die Kautschukzusammensetzung einen ersten Kautschuk mit einer T_{g} von ≥ -120 °C bis ≤ -50 °C und einen zweiten Kautschuk mit einer T_{g} von ≥ -50 °C bis ≤ -10 °C umfasst.

9. Kautschukzusammensetzung nach einem der Ansprüche 1 bis 8, wobei die Zusammensetzung Folgendes umfasst:
| | phr |
|---|---|
| Kautschukkomponenten | |
| BR mit einer T_{g} von ≥ -110 °C bis ≤ -80 °C | ≥ 35 bis ≤ 55 |
| SSBR mit einem Styrolgehalt von ≥ 15 bis ≤ 25 Gew.-%, einem Vinylgehalt von ≥ 40 bis ≤ 60 Gew.-% und einer T_{g} von ≥ -30 °C bis ≤ -15 °C | ≥ 10 bis ≤ 30 |
| SSBR mit einem Styrolgehalt von ≥ 5 bis ≤ 50 Gew.-%, einem Vinylgehalt von ≥ 20 bis ≤ 60 Gew.-% und einer T_{g} von ≥ -70 °C bis ≤ -20 °C | ≥ 30 bis ≤ 50 |
| Additive | |
|---|---|
| Polyterpenharz, C5-Harz oder Terpen-Phenol-Harz | ≥ 20 bis ≤ 40 |
| Styrol-Isopren-Styrol(SIS)-Blockcopolymer mit einer T_{g} von ≥ -20 °C bis ≤ -10 °C und einem Styrolgehalt von ≥ 15 bis ≤ 25 Gew.-% | ≥ 5 bis ≤ 30 |
| Silan der Struktur 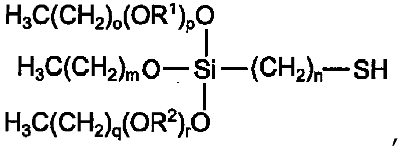 wobei R¹ und R² für Ethylen- oder Propylenreste stehen, n ≥ 2 bis ≤ 4 ist, m ≥ 1 bis ≤ 2 ist, o ≥ 11 bis ≤ 13 ist, p ≥ 4 bis ≤ 6 ist, q ≥ 11 bis ≤ 13 ist und r ≥ 4 und ≤ 6 ist, und/oder 3-Octanoylthio-1-propyltriethoxy-silan | ≥ 5 bis ≤ 20 |

10. Kautschukzusammensetzung nach einem der Ansprüche 1 bis 8, wobei die Zusammensetzung Folgendes umfasst:
| | phr |
|---|---|
| Kautschukkomponenten | |
| BR mit einer T_{g} von ≥ -110 °C bis ≤ -80 °C | ≥ 30 bis ≤ 60 |
| SSBR mit einem Styrolgehalt von ≥ 15 bis ≤ 30 Gew.-%, einem Vinylgehalt von ≥ 40 bis ≤ 60 Gew.-% und einer T_{g} von ≥ -30 °C bis ≤ -15 °C | ≥ 5 bis ≤ 35 |
| SSBR mit einem Styrolgehalt von ≥ 5 bis ≤ 20 Gew.-%, einem Vinylgehalt von ≥ 15 bis ≤ 40 Gew.-% und einer T_{g} von ≥ -70 °C bis ≤ -50 °C | ≥ 20 bis ≤ 60 |
| Additive | |
|---|---|
| Polyterpenharz, C5-Harz oder Terpen-Phenol-Harz | ≥ 20 bis ≤ 40 |
| Styrol-Isopren-Styrol(SIS)-Blockcopolymer mit einer T_{g} von ≥ -20 °C bis ≤ -10 °C und einem Styrolgehalt von ≥ 15 bis ≤ 25 Gew.-% | ≥ 5 bis ≤ 30 |
| Silan der Struktur 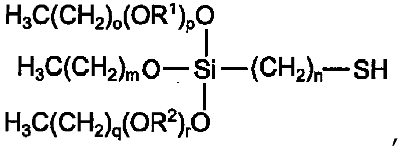 wobei R¹ und R² für Ethylen- oder Propylenreste stehen, n ≥ 2 bis ≤ 4 ist, m ≥ 1 bis ≤ 2 ist, o ≥ 11 bis ≤ 13 ist, p ≥ 4 bis ≤ 6 ist, q ≥ 11 bis ≤ 13 ist und r ≥ 4 und ≤ 6 ist, und/oder 3-Octanoylthio-1-propyltriethoxy-silan | ≥ 5 bis ≤ 20 |

11. Verfahren zur Herstellung einer vernetzbaren Kautschukzusammensetzung nach einem der Ansprüche 1 bis 10, das folgende Schritte umfasst:
A) Bereitstellen einer Kautschukkomponente aus der Gruppe bestehend aus SBR, BR, NR oder einer Mischung davon;
B) Zugeben von ≥ 1 phr bis ≤ 50 phr eines thermoplastischen Elastomers (TPE) mit einer Glasübergangstemperatur ≥ -30 °C (gemessen durch DSC nach ISO 22768), einer Harzkomponente und einer Silankomponente, die ein blockiertes Mercaptosilan und/oder ein unblockiertes Mercaptosilan umfasst;
C) Zugeben von Härtungsmitteln.

12. Vernetzte Kautschukzusammensetzung, **dadurch gekennzeichnet, dass** sie durch Vernetzen einer Kautschukzusammensetzung nach einem der Ansprüche 1 bis 10 erhalten wird.

13. Vernetzte Kautschukzusammensetzung nach Anspruch 11 mit einem tan delta bei 0 °C von ≥ 0,27 bis ≤ 0,30 (bestimmt aus DMA-Messungen nach ISO 4664-1, Frequenz 10 Hz, 0,1 % dynamische Spannung) und einem tan delta bei 70 °C von ≥ 0,10 bis ≤ 0,16 (bestimmt aus DMA-Messungen nach ISO 4664-1, Frequenz 10 Hz, 6 % dynamische Spannung).

14. Verfahren zur Herstellung eines Reifens, das folgende Schritte umfasst:
- Bereitstellen einer Reifenanordnung, die eine Kautschukzusammensetzung nach einem der Ansprüche 1 bis 10 umfasst;
- Vernetzen mindestens der Kautschukzusammensetzung nach einem der Ansprüche 1 bis 10 in der Reifenanordnung.

15. Reifen mit einer Lauffläche, **dadurch gekennzeichnet, dass** die Reifenlauffläche eine vernetzte Kautschukzusammensetzung nach Anspruch 12 oder 13 umfasst.

## Revendications

1. Composition de caoutchouc réticulable, la composition de caoutchouc réticulable comprenant, par cent parties en poids de caoutchouc (phr) :
≥ 1 phr à ≤ 100 phr d'un composant de type caoutchouc choisi dans le groupe composé d'un caoutchouc de styrène-butadiène (SBR), d'un caoutchouc de polybutadiène (BR), d'un caoutchouc naturel (NR) et d'un mélange correspondant ;
**caractérisé en ce que**
la composition comprend en outre ≥ 1 phr à ≤ 50 phr d'un élastomère thermoplastique (TPE) doté d'une température de transition vitreuse de ≥ - 30 °C (mesurée par DSC, selon la norme ISO 22768),
la composition comprend en outre un composant de type résine au moins partiellement aliphatique et
la composition comprend en outre un mercaptosilane bloqué et/ou un mercaptosilane non bloqué.

2. Composition de caoutchouc selon la revendication 1, la composition comprenant un mercaptosilane bloqué selon la formule R₃Si-Z-S-R' dont les substituants R individuels sont égaux ou différents les uns des autres et désignant un groupe comprenant des groupes alcoxy comportant 1 à 10 atomes de carbone, R' désignant un groupe acyle comportant 1 à 20 atomes de carbone et Z désignant un groupe alkyle comportant 1 à 10 atomes de carbone.

3. Composition de caoutchouc selon la revendication 1 ou 2, la composition comprenant un mercaptosilane non bloqué qui comprend un groupe fonctionnel de type alkylthiol et un groupe fonctionnel de type poly(oxyde d'alkylène) coiffé aux extrémités par alkyle.

4. Composition de caoutchouc selon l'une des revendications 1 à 3, le TPE possédant une température de transition vitreuse de ≥ -30 °C à ≤ 10 °C (mesurée par DSC, selon la norme ISO 22768).

5. Composition de caoutchouc selon l'une des revendications 1 à 4, la quantité de TPE présent dans la composition n'étant pas considérée comme du caoutchouc dans le cadre de la détermination des quantités des composants individuels de la composition sur la base de leur valeur de phr.

6. Composition de caoutchouc selon l'une des revendications 1 à 5, le TPE étant un élastomère de styrène-isoprène-styrène (SIS), un élastomère de styrène-butadiène-styrène (SBR) ou un élastomère de styrène-éthylène-butylène-styrène (SEBS) .

7. Composition de caoutchouc selon l'une des revendications 1 à 6, le composant de type résine comprenant une résine de polyterpène, une résine C5, un DCPD ou une résine phénolique-terpénique.

8. Composition de caoutchouc selon l'une des revendications 1 à 7, la composition de caoutchouc comprenant un premier caoutchouc doté d'une T_{g} de ≥
- 120 °C à ≤ -50 °C et un deuxième caoutchouc doté d'une T_{g} de ≥ -50 °C à ≤ -10 °C.

9. Composition de caoutchouc selon l'une des revendications 1 à 8, la composition comprenant :
| | phr |
|---|---|
| Composants de caoutchouc | |
| BR doté d'une T_{g} de ≥ -110 °C à ≤ -80 °C | ≥ 35 à ≤ 55 |
| SSBR doté d'une teneur en styrène de ≥ 15 à ≤ 25 % en poids, d'une teneur en vinyle de ≥ 40 à ≤ 60 % en poids et d'une T_{g} de ≥ -30 °C à ≤ -15 °C | ≥ 10 à ≤ 30 |
| SSBR doté d'une teneur en styrène de ≥ 5 à ≤ 50 % en poids, d'une teneur en vinyle de ≥ 20 à ≤ 60 % en poids et d'une T_{g} de ≥ -70 °C à ≤ -20 °C | ≥ 30 à ≤ 50 |
| Additifs | |
|---|---|
| Résine de polyterpène, résine C5 ou résine phénolique-terpénique | ≥ 20 à ≤ 40 |
| Copolymère à blocs de styrène-isoprène-styrène (SIS) doté d'une T_{g} de ≥ -20 °C à ≤ -10 °C et d'une teneur en styrène de ≥ 15 à ≤ 25 % en poids | ≥ 5 à ≤ 30 |
| Silane de la structure 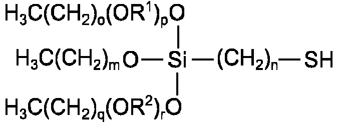 où R¹ et R² sont des radicaux éthylène ou propylène, n est ≥ 2 à ≤ 4, m est ≥ 1 à ≤ 2, o est ≥ 1 11 à ≤ 13, p est ≥ 4 à ≤ 6, q est ≥ 11 à ≤ 13 et r est ≥ 4 à ≤ 6 et/ou 3-octanoylthio-1-propyltriéthoxysilane | ≥ 5 à ≤ 20 |

10. Composition de caoutchouc selon l'une des revendications 1 à 8, la composition comprenant :
| | phr |
|---|---|
| Composants de caoutchouc | |
| BR doté d'une T_{g} de ≥ -110 °C à ≤ -80 °C | ≥ 30 à ≤ 60 |
| SSBR doté d'une teneur en styrène de ≥ 15 à ≤ 30 % en poids, d'une teneur en vinyle de ≥ 40 à ≤ 60 % en poids et d'une T_{g} de ≥ -30 °C à ≤ -15 °C | ≥ 5 à ≤ 35 |
| SSBR doté d'une teneur en styrène de ≥ 5 à ≤ 20 % en poids, d'une teneur en vinyle de ≥ 15 à ≤ 40 % en poids et d'une T_{g} de ≥ -70 °C à ≤ -50 °C | ≥ 20 à ≤ 60 |
| Additifs | |
|---|---|
| Résine de polyterpène, résine C5 ou résine phénolique-terpénique | ≥ 20 à ≤ 40 |
| Copolymère à blocs de styrène-isoprène-styrène (SIS) doté d'une T_{g} de ≥ -20 °C à ≤ -10 °C et d'une teneur en styrène de ≥ 15 à ≤ 25 % en poids | ≥ 5 à ≤ 30 |
| Silane de la structure 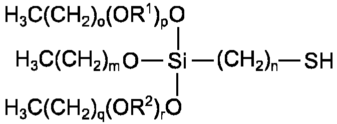 où R¹ et R² sont des radicaux éthylène ou propylène, n est ≥ 2 à ≤ 4, m est ≥ 1 à ≤ 2, o est ≥ 1 11 à ≤ 13, p est ≥ 4 à ≤ 6, q est ≥ 11 à ≤ 13 et r est ≥ 4 à ≤ 6 et/ou 3-octanoylthio-1-propyltriéthoxysilane | ≥ 5 à ≤ 20 |

11. Procédé de préparation d'une composition de caoutchouc réticulables selon l'une des revendications 1 à 10, comprenant les étapes de :
A) mise à disposition d'un composant de type caoutchouc choisi dans le groupe composé par SBR, BR, NR ou un mélange correspondant ;
B) ajout de ≥1 phr à ≤ 50 phr d'un élastomère thermoplastique (TPE) doté d'une température de transition vitreuse de ≥ -30 °C (mesurée par DSC, selon la norme ISO 22768), d'un composant de type résine et d'un composant de type silane qui comprend un mercaptosilane bloqué et/ou un mercaptosilane non bloqué ;
C) ajout d'agents de durcissement.

12. Composition de caoutchouc réticulée, **caractérisée en ce qu'**elle est obtenue par réticulation d'une composition de caoutchouc selon l'une des revendications 1 à 10.

13. Composition de caoutchouc réticulée selon la revendication 11 dotée d'un tan delta à 0 °C de ≥ 0,27 à ≤ 0,30 (déterminé à partir de mesures de DMA selon la norme ISO 4664-1, fréquence 10 Hz, 0,1 % de contrainte dynamique) et d'un tan delta à 70 °C de ≥ 0,10 à ≤ 0,16 (déterminé à partir de mesures de DMA selon la norme ISO 4664-1, fréquence 10 Hz, 6 % de contrainte dynamique).

14. Procédé de préparation d'un pneu, comprenant les étapes de :
- mise à disposition d'un ensemble pneumatique comprenant une composition de caoutchouc selon l'une des revendications 1 à 10 ;
- réticulation d'au moins la composition de caoutchouc selon l'une des revendications 1 à 10 dans l'ensemble pneumatique.

15. Pneu comprenant une bande de roulement, **caractérisé en ce que** la bande de roulement comprend une composition de caoutchouc réticulée selon la revendication 12 ou 13.
